# EUROPEAN PATENT SPECIFICATION

(11) **EP 3 291 242 B1**
(45) Date of publication and mention of the grant of the patent: **18.12.2019**
(21) Application number: 15890804.6
(22) Date of filing: 13.05.2015
(51) Int. Cl.: G21C 15/18, G21C 9/016

(54) **PASSIVELY OPERATING COOLING DEVICE FOR EX-VESSEL CORIUM**
KÜHLVORRICHTUNG MIT PASSIVBETRIEB FÜR EX-VESSEL-CORIUM
DISPOSITIF DE REFROIDISSEMENT À FONCTIONNEMENT PASSIF POUR CORIUM HORS CUVE

(30) Priority: 27.04.2015 KR 20150058933
(43) Date of publication of application: 07.03.2018
(73) Proprietor: Korea Hydro & Nuclear Power Co., Ltd., Gyeongju-si Gyeongsangbuk-do 780-947 (KR)
(72) Inventor: KIM, Yong Su, Gyeongsangbukdo 38127 (KR); HWANG, Do Hyeon, Daejeon 305-753 (KR); LEE, Geun Sung, Daejeon 305-509 (KR); KIM, Gee Hyan, Daejeon 305-759 (KR)
(74) Representative: HGF Limited
(86) International application number: PCT/KR2015/004751
(87) International publication number: WO 2016/175363

(56) References cited:
- EP-A1- 2 228 802
- EP-A1- 2 228 802
- EP-A1- 2 747 087
- JP-A- 2010 112 772
- KR-B1- 100 873 647
- KR-B1- 101 106 456
- KR-B1- 101 233 314
- RU-C1- 2 063 071

## Description

### [Technical Field]

The present invention relates to a passively operating cooling device for ex-vessel corium, the passively operating cooling device having a core catcher 3 provided below a reactor pressure vessel 2 in a reactor cavity area so as to prepare for severe accidents damaging to the nuclear reactor pressure vessel, and injecting, by gravity, cooling water for cooling corium, by the water supply source of an in-containment refueling water storage tank when a cooling water injection valve 7 is opened, wherein the cooling water injection valve is interlocked with a string so as to be opened according to a temperature, of which the value exceeds a set value, and is mechanically driven using the tension of the string.

### [Background Art]

When a severe accident, which a core is melted, occurs in a reactor pressure vessel installed inside a containment building of a nuclear power plant, corium is released to a reactor cavity through a damaged part of a reactor pressure vessel. A facility that collects, holds, and cools the corium in a containment building cavity is called an ex-vessel corium cooling device (core catcher) in preparation for such a situation.

In general, after the corium released from the reactor pressure vessel reaches the core catcher, cooling water is directly or indirectly supplied to remove decay heat of the corium and in this case, stable cooling water supplying is a required element for high-temperature corium.

In the cooling water injection in the related art, used is a method in which when a signal exceeding a certain temperature is generated from a temperature measuring instrument installed at a specific point in a cavity around the core catcher by a motor driven valve (MOV) powered by a DC battery provided separately from an inside/outside power supply, a valve is opened to inject the cooling water.

However, in such a core catcher cooling water injection method, there is a cooling water injection failure possibility due to an active device failure, lack of integrity of a temperature measuring instrument in a serious accident condition, and lowered reliability of the temperature signal.

Russian patent application RU 2063071 C1 is directed to a nuclear reactor construction in which, where there is a disruption of the reactor body and accidentally core melt goes through a cooler feeder, the core melt goes to a middle part made from easy melted material like partition member. Thermal explosions throw out water from side cooler intakes and elevating channels. Melt crushes down suspensions for blank plugs of stop valves, which are transmitted through blank plugs pawls by consequent thermal explosions actions and after this stop valves are found closed tightly but residual water is pushing out through antishock channels by steam pressure action. Partition member melt transports to "dry trap". A thermodamper protects gathering container from thermal shock. After intermediate heat gathering collector starts to overheat with respect to heat pipes, the temperature of operating melt transfers heat to water in elevation section. Heat is removed by water or by two-phases mixture by circulation in a loop composed by crawlway, concrete vault, separation section, elevating section and elevation tubes. European patent application EP2228802 is directed to a reactor containment vessel, wherein if a molten core holding apparatus (core catcher) which is disposed below a reactor pressure vessel in a reactor containment vessel, water leak cannot be detected at a pedestal floor. Thus the reactor containment vessel has to be separately equipped with a mechanism for detecting the water leak. A water leak detection floor transversally suspended by a pedestal side wall is installed between a reactor pressure vessel and a molten core holding apparatus. If a water leak occurs at the reactor pressure vessel, the water leak detection floor receives and detects the leak water. In a core meltdown accident, corium melts and penetrates the water leak detection floor and deposits on the molten core holding apparatus. European patent application EP2747087 is directed to a pipe enclosure unit having a pipe section with a shut-off unit arranged in a pipe line. The shut-off unit is arranged in the closing position by the fuel rods supply device, such that the fuel rods supply device for the destruction of the shut-off unit is actuatable from the outside. The shut-off unit is in the form of a disc. The disc is sealed by an encircling seal arranged at the end opposite to the pipe section. The shut-off unit is made of a brittle material. Korean Patent Laid-Open Publication No. 10-2014-0139947 discloses a passively operating sequential cooling device of corium including an intra-vessel structure primarily cooling the corium and an ex-vessel structure that injects cooling water and gas into the corium collected for secondarily cooling the corium and Korean Patent Laid-Open Publication 10-2014-0051622 discloses corium cooling method using a liquid metallic layer and a reactor cooling system using the same, but is significantly different in a technical configuration and an action effect from providing a passively operating ex-vessel corium cooling device in which a cooling water injection valve which is a main technical component of the present invention is opened by using tension of a string by a temperature which exceeds a set value by interlocking with a string and when the valve is opened, cooling water is supplied by gravity.

### [Disclosure]

### [Technical Problem]

An object to be solved by the present invention is contrived to solve the problem and is to provide a passively operating ex-vessel corium cooling device which is mechanically driven by the tension of a string without requiring power and measurement in cooling water injection of a core catcher.

### [Technical Solution]

A solving means of the problem of the present invention is provided by a passively operating cooling device for ex-vessel corium according to claim 1. The device includes: a fusible plug installed at a lowermost portion of an insulation in which the corium is collected by gravity; a string cut off when the fusible plug is damaged by a metallic material below the fusible plug and buried and installed so as to transfer a mechanical signal to a cooling water injection valve; a core catcher installed immediately below the fusible plug so as to contain the corium, which is released through a damaged part of a reactor pressure vessel, while the corium drops by penetrating the fusible plug; a cooling water tank outside a nuclear reactor in order to cool the corium; a pipe for transporting the cooling water in the cooling water tank to the core catcher having the corium; and a cooling water injection valve configured to be installed at one side of the pipe and interlocked with the string, in which the cooling water injection valve which is kept to be closed by tension of the string connecting both ends of the fusible plug and the cooling water injection valve is configured to be switched to be opened while the string fixedly buried and installed in the fusible plug when the corium drops.

According to one embodiment of the present invention, a string tension controller is installed between an end of the string fixedly buried in the fusible plug and a cooling water injection valve driving device at the opposite end, and the tension of the string which supports both ends is configured to be periodically checked and adjusted by the string tension controller.

Yet according to another embodiment of the present invention, the string is disposed and installed so as to be maximally accommodated with an area of the fusible plug and installed bidirectionally in two series and two strings are installed in one cooling water injection valve for each series so as to minimize a mechanical malfunction possibility in a normal state, and the cooling water injection valve is opened only when all of two strings are cut off.

Still according to another embodiment of the present invention, the pipe for transporting the cooling water in the cooling water tank to the core catcher having the corium is fixedly installed at a height corresponding to a lower end of the cooling water tank and the lower end of the core catcher so as to rapidly transport the cooling water by water pressure.

### [Advantageous Effects]

By a core catcher which comprises a cooling device according to the present invention, since the core catcher is passively driven without a power supply and a measurement instrument in injecting cooling water, an operation failure possibility by power and measurement related elements is fundamentally excluded to minimize a possibility of a steam explosion due to the flooding of cooling water before corium reaches and this corium cooling device can be easily inspected.

### [Description of Drawings]

FIG. 1 is a cross-sectional configuration diagram schematically illustrating a core catcher system installed in the related art.
FIG. 2 illustrates a detailed configuration and an operation of a passively operating ex-vessel corium cooling device according to the invention, which is mechanically driven by the tension of a string.
FIG. 3 illustrates an embodiment of a string being fixed and buried in a fusible plug according to the invention.

### [Best Mode]

The present invention provides a passively operating cooling device for ex-vessel corium, which includes: corium released through a damaged part of a reactor pressure vessel; a fusible plug installed at a lowermost portion of an insulation in which the corium is collected by gravity; a string cut off when the fusible plug is damaged by a metallic material below the fusible plug and buried and installed so as to transfer a mechanical signal to a cooling water injection valve; a core catcher installed immediately below the fusible plug so as to contain the corium while the corium drops by penetrating the fusible plug; a cooling water tank outside a nuclear reactor in order to cool the corium; a pipe for transporting the cooling water in the cooling water tank to the core catcher having the corium; and a cooling water injection valve configured to be installed at one side of the pipe and interlocked with the string, in which the cooling water injection valve which is kept to be closed by tension of the string connecting both ends of the fusible plug and the cooling water injection valve is configured to be switched to be opened while the string fixedly buried and installed in the fusible plug at the time when the corium drops.

Detailed contents for carrying out the present invention will be described.

The present invention relates to a passively operating cooling device for ex-vessel corium, the passively operating cooling device having a core catcher provided below a reactor pressure vessel in a reactor cavity area so as to prepare for severe accidents damaging to the reactor pressure vessel, and injecting, by gravity, cooling water for cooling corium, by the water supply source of an in-containment refueling water storage tank when a cooling water injection valve is opened, wherein the cooling water injection valve is interlocked with a string so as to be opened according to a temperature, of which the value exceeds a set value, and is mechanically driven using the tension of the string. A detailed embodiment according to the present invention will be described.

### <Embodiment>

A detailed embodiment according to the present invention will be described based on drawings.

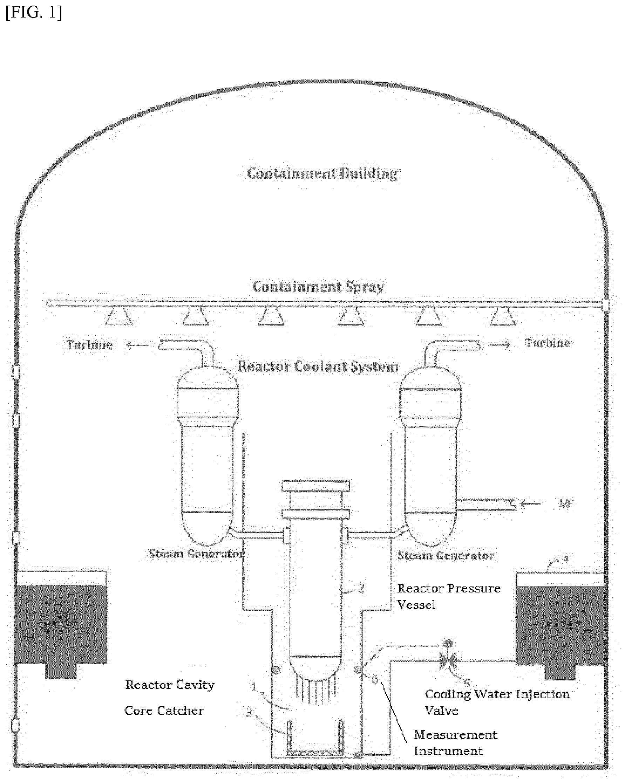

FIG. 1 is a cross-sectional configuration diagram schematically illustrating a core catcher system installed in the related art. There is a scheme in which a core catcher 3 is installed below a reactor pressure vessel 2 so as to prepare for severe accidents damaging to a reactor pressure vessel, a water source of an in-containment refueling water storage tank 4 is used, and the water for cooling the corium is injected by gravity when the cooling water injection valve 5 is opened and the valve is opened by a temperature which exceeds a set value by receiving a signal of a temperature measurement instrument 6 installed in a reactor cavity.

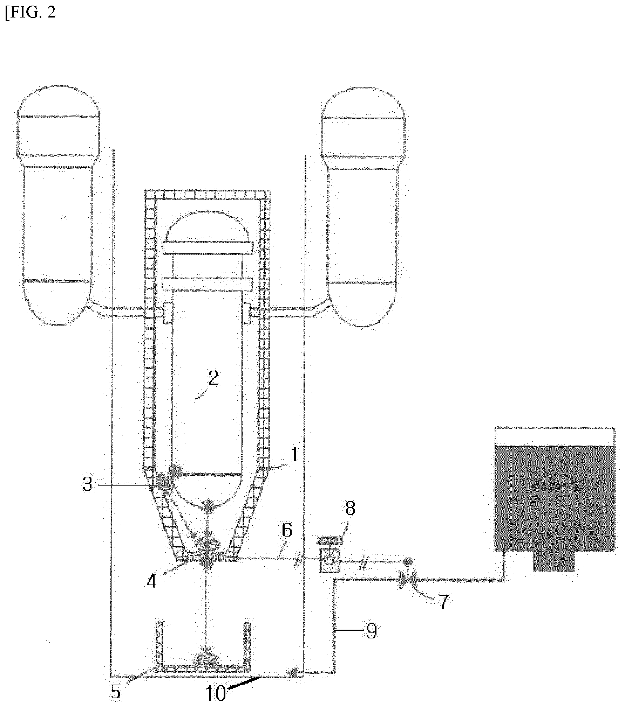

FIG. 2 illustrates a detailed configuration and an operation of a passively operating ex-vessel corium cooling device which is mechanically driven by using tension of a string. A cooling system may be configured, which is passively operating so as to open the cooling water injection valve by mechanical driving force at the time when a fusible plug is damaged by the corium by mechanically connecting a fusible plug part of a reactor insulation and the cooling water injection valve supplied to the core catcher. The corium released through a damaged portion of the nuclear pressure vessel 2 is primarily collected in an insulation body 3 installed outside the nuclear pressure vessel and finally collected in a fusible plug (4) part at a lowermost end of the insulation body by the gravity.

The fusible plug (4) part is constituted by two layers and an upper layer is made of a sacrificial material which is large in reactivity with the corium and is easily eroded and damaged and a lower layer is configured to fixedly bury a string 6 which is a mediator that transfers a mechanical signal to the cooling water injection valve 7 when the fusible plug 4, made in a metallic material, is damaged.

When the erosion of the sacrificial material starts through a mutual reaction of a high-temperature corium and the sacrificial material of the fusible plug and the corium drops to the core catcher 5 installed at a direct lower portion by penetrating the fusible plug part by continuous erosion, the cooling water injection valve which is kept to be closed by the tension of the string connecting both ends of the fusible plug 4 and the cooling water injection valve 7 is configured to be switched to be opened by the tension of the string 6 fixedly buried and installed in the fusible plug 4, when the corium drops, and finally the cooling water injection starts.

Further, a string tension controller 8 is installed between an end of the string 6 fixedly buried in the fusible plug 4 and a cooling water injection valve (7) driving device at the opposite end, and the tension of the string 6 which supports both ends is configured to be periodically checked and adjusted by the string tension controller 8.

The string 6 is controlled not to be cut off in a situation in which no severe accident occurs to minimize a cooling water injection failure possibility.

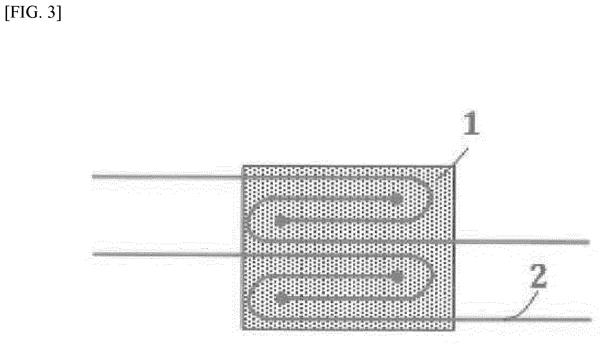

FIG. 3 illustrates an example of a layout of a string 6 fixed and buried in a fusible plug 4.

The string is disposed and installed so as to maximally accommodate an area of the fusible plug 4 positioned at the lowermost end where the corium released to the insulation body is finally collected and installed in two series bidirectionally to ensure the redundancy on the supply of the cooling water.

Further, the string is installed in two series bidirectionally and two strings are connected and installed into one cooling water injection valve for each series and only when both of two installed strings are cut off, the cooling water injection valve is made to be opened, thereby minimizing a mechanical malfunction possibility in a normal state. Of course, two or more strings may be installed by considering reliability and the malfunction possibility.

A basement 10 made of concrete is installed under the core catcher. When the cooling water first flows in, the cooling is made while the cooling water passes a channel between the basement 10 and the core catcher.

After a predetermined time, direct cooling is made while the cooling water flows into an upper portion of the core catcher and after the direct cooling, the cooing is made through natural circulation.

A pipe 9 for transporting the cooling water in the cooling water tank to the core catcher having the corium is preferably connected and installed at a height corresponding to a lower end of the cooling water tank and the lower end of the core catcher so as to rapidly transport the cooling water by using water pressure.

The technical configuration of the passively operating cooling device for ex-vessel corium described above is summarized as below.

The present invention includes a fusible plug 4 installed at a lowermost end of an insulation body 3 in which the corium, which is released through a damaged part of a reactor pressure vessel 2, is collected by gravity, and a string 6 buried and installed on a lower layer of the fusible plug 4 as a mediator so as to transfer a mechanical signal to a cooling water injection valve 7 when the fusible plug 4 made in a metallic material is damaged.

Further, the present invention includes a core catcher 5 installed immediately below the fusible plug so as to contain the corium while the corium drops by penetrating the fusible plug, a cooling water tank outside a reactor pressure vessel, and a pipe 9 connected and installed for transporting the cooling water in the cooling water tank to the core catcher 5 having the corium.

The cooling water injection valve 7 is installed, which is installed at one side of the pipe and is interlocked with the string.

The cooling water injection valve which is kept to be closed by the tension of the string connecting both ends of the fusible plug 4 and the cooling water injection valve 7 is configured to be switched to be opened by the tension of the string 6 fixedly buried and installed in the fusible plug 4 when the corium drops.

In the present invention, since easy cooling can be made by providing a passively operating cooling device for ex-vessel corium, the passively operating cooling device having a core catcher 3 provided at the lower part of a reactor pressure vessel 2 in a reactor cavity area so as to prepare for severe accidents damaging to the reactor pressure vessel, and injecting, by gravity, cooling water for cooling corium, by the water supply source of an in-containment refueling water storage tank 4 when a cooling water injection valve 7 is opened, wherein the cooling water injection valve is interlocked with a string so as to be opened according to a temperature, of which the value exceeds a set value, and is mechanically driven using the tension of a string so that industrial applicability is very high.

## Claims

1. A passively operating cooling device for ex-vessel corium, comprising:
an insulation (3);
a fusible plug (4) comprising a metallic material lower layer and being installed at a lowermost portion of the insulation (3), wherein the insulation (3) is adapted to collect corium, which is released through a damaged part of a nuclear pressure vessel (2), by gravity;
a string (6) being fixedly buried and installed on the metallic lower layer of the fusible plug (4) and being adapted to be cut off when the fusible plug (4) is damaged, so as to transfer a mechanical signal to a cooling water injection valve (7);
a core catcher (5) installed immediately below the fusible plug (4) so as to contain the corium while the corium drops by penetrating the fusible plug;
a cooling water tank outside a nuclear reactor in order to cool the corium;
a pipe for transporting the cooling water in the cooling water tank to the core catcher (5) having the corium; and
the cooling water injection valve (7) configured to be installed at one side of the pipe and interlocked with the string (6),
wherein the cooling water injection valve (7) is kept closed by tension of the string (6) connecting both ends of the fusible plug (4) and the cooling water injection valve (7) and;
wherein the cooling water injection valve (7) is configured to be switched open when the string (6) is cut when the corium drops.

2. The passively operating cooling device for ex-vessel corium of claim 1, wherein a string tension controller (8) is installed between an end of the string (6) fixedly buried in the fusible plug (4) and a cooling water injection valve driving device at the opposite end, and
the tension of the string (6) which supports both ends is configured to be periodically checked and adjusted by the string tension controller (8).

3. The passively operating cooling device for ex-vessel corium of claim 2, wherein the string (6) is disposed and installed so as to be maximally accommodated with an area of the fusible plug (4) and installed bidirectionally in two series and wherein two strings are connected and installed into one cooling water injection valve (7) for each series, and the cooling water injection valve (7) is configured to be opened only when all of the two strings are cut off in one cooling water injection valve (7) so as to minimize a mechanical malfunction possibility in a normal state.

4. The passively operating cooling device for ex-vessel corium of claim 2 or 3, wherein the pipe (9) for transporting the cooling water in the cooling water tank to the core catcher (5) having the corium is fixedly installed at a height corresponding to a lower end of the cooling water tank and the lower end of the core catcher (5) so as to rapidly transport the cooling water by using water pressure.

## Patentansprüche

1. Passiv arbeitende Kühlvorrichtung für Ex-Vessel-Schmelze, umfassend:
eine Isolierung (3);
einen Schmelzstopfen (4), der eine untere Metallwerkstoffschicht umfasst und und an einem untersten Abschnitt der Isolierung (3) installiert ist, wobei die Isolierung (3) dazu geeignet ist, Schmelze, welche durch einen beschädigten Teil eines Reaktordruckbehälters (2) freigesetzt wird, durch Schwerkraft aufzufangen;
eine Leine (6), die fest in der unteren Metallschicht des Schmelzstopfens (4) eingebettet und installiert ist und dazu geeignet ist, abgeschnitten zu werden, wenn der Schmelzstopfen (4) beschädigt ist, um ein mechanisches Signal an ein Kühlwassereinspritzventil (7) zu übermitteln;
einen Kernfänger (5) der unmittelbar unter dem Schmelzstopfen (4) installiert ist, um die Schmelze zu enthalten, während die Schmelze durch Durchdringen des Schmelzstopfen tropft;
einen Kühlwasserbehälter außerhalb eines Kernreaktors, um die Schmelze zu kühlen;
ein Rohr zum Transportieren des Kühlwassers in dem Kühlwasserbehälter zu dem Kernfänger (5), der die Schmelze aufweist; und
das Kühlwassereinspritzventil (7), das dazu konfiguriert ist, an einer Seite des Rohres installiert und mit der Leine (6) verriegelt zu sein,
wobei das Kühlwassereinspritzventil (7) durch Spannung der Leine (6), die beide Enden des Schmelzstopfens (4) und des Kühlwassereinspritzventils (7) verbindet, geschlossen gehalten wird und;
wobei das Kühlwassereinspritzventil (7) dazu konfiguriert ist, auf offen geschaltet zu werden, wenn die Leine (6) geschnitten wird, wenn die Schmelze tropft.

2. Passiv arbeitende Kühlvorrichtung für Ex-Vessel-Schmelze nach Anspruch 1, wobei ein Leinenspannungssteuergerät (8) zwischen einem Ende der Leine (6), die fest in dem Schmelzstopfen (4) eingebettet ist, und einer Kühlwassereinspritzventil-Antriebsvorrichtung am entgegengesetzten Ende installiert ist, und
die Spannung der Leine (6), die beide Enden trägt, dazu konfiguriert ist, durch das Leinenspannungssteuergerät (8) periodisch überprüft und justiert zu werden.

3. Passiv arbeitende Kühlvorrichtung für Ex-Vessel-Schmelze nach Anspruch 2, wobei die Leine (6) angeordnet und installiert ist, um maximal mit einem Bereich des Schmelzstopfens (4) aufgenommen und bidirektional in zwei Reihen installiert zu werden, und wobei zwei Leinen an ein Kühlwassereinspritzventil (7) für jede Reihe angeschlossen und in dieses installiert sind, und das Kühlwassereinspritzventil (7) dazu konfiguriert ist, nur geöffnet zu werden, wenn sämtliche zwei Leinen in einem Kühlwassereinspritzventil (7) abgeschnitten werden, um eine mechanische Fehlfunktionsmöglichkeit in einem normalen Zustand zu minimieren.

4. Passiv arbeitende Kühlvorrichtung für Ex-Vessel-Schmelze nach Anspruch 2 oder 3, wobei das Rohr (9) zum Transportieren des Kühlwassers in dem Kühlwasserbehälter zum Kernfänger (5), der die Schmelze aufweist, fest auf einer Höhe installiert ist, die einem unteren Ende des Kühlwasserbehälters und dem unteren Ende des Kernfängers (5) entspricht, um das Kühlwasser unter Verwendung von Wasserdruck schnell zu transportieren.

## Revendications

1. Dispositif de refroidissement à fonctionnement passif pour corium hors cuve, comprenant :
un isolant (3) ;
un bouchon fusible (4) comprenant une couche inférieure en matériau métallique et étant installé au niveau d'une partie la plus inférieure de l'isolant (3), ledit isolant (3) étant adapté pour collecter du corium, qui est libéré à travers une partie endommagée d'une cuve nucléaire sous pression (2), par gravité ;
une corde (6) étant enterrée de manière fixe et installée sur la couche métallique inférieure du bouchon fusible (4) et étant adaptée pour être coupée lorsque le bouchon fusible (4) est endommagé, de façon à transférer un signal mécanique à une soupape d'injection d'eau de refroidissement (7) ;
un récupérateur de cœur (5) installé immédiatement sous le bouchon fusible (4) de façon à contenir le corium tandis que le corium tombe en pénétrant dans le bouchon fusible ;
un réservoir d'eau de refroidissement à l'extérieur d'un réacteur nucléaire afin de refroidir le corium ;
un tuyau destiné à transporter de l'eau de refroidissement dans le réservoir d'eau de refroidissement jusqu'au récupérateur de cœur (5) contenant le corium ; et
la soupape d'injection d'eau de refroidissement (7) étant conçue pour être installée sur un côté du tuyau et verrouillée avec la corde (6),
ladite soupape d'injection d'eau de refroidissement (7) étant maintenue fermée par la tension de la corde (6) reliant les deux extrémités du bouchon fusible (4) et la soupape d'injection d'eau de refroidissement (7) et ;
ladite soupape d'injection d'eau de refroidissement (7) étant conçue pour être ouverte lorsque la corde (6) est coupée lorsque le corium tombe.

2. Dispositif de refroidissement à fonctionnement passif pour corium hors cuve selon la revendication 1, un dispositif de commande (8) de tension de corde étant installé entre une extrémité de la corde (6) enterrée de manière fixe dans le bouchon fusible (4) et un dispositif d'actionnement de soupape d'injection d'eau de refroidissement au niveau de l'extrémité opposée, et
ladite tension de la corde (6) qui supporte les deux extrémités étant conçue pour être vérifiée et réglée périodiquement par le dispositif de commande (8) de tension de corde.

3. Dispositif de refroidissement à fonctionnement passif pour corium hors cuve selon la revendication 2, ladite corde (6) étant disposée et installée de façon à être logée au maximum dans une zone du bouchon fusible (4) et installée de manière bidirectionnelle en deux séries et deux cordes étant raccordées et installées dans une soupape d'injection d'eau de refroidissement (7) pour chaque série, et ladite soupape d'injection d'eau de refroidissement (7) étant conçue pour être ouverte uniquement lorsque les deux cordes sont coupées dans une soupape d'injection d'eau de refroidissement (7) de façon à minimiser une possibilité de dysfonctionnement mécanique dans un état normal.

4. Dispositif de refroidissement à fonctionnement passif pour corium hors cuve selon la revendication 2 ou 3, ledit tuyau (9) destiné à transporter l'eau de refroidissement dans le réservoir d'eau de refroidissement jusqu'au récupérateur de cœur (5) possédant le corium étant installé de manière fixe à une hauteur correspondant à une extrémité inférieure du réservoir d'eau de refroidissement et l'extrémité inférieure du récupérateur de cœur (5) de façon à transporter rapidement l'eau de refroidissement à l'aide de la pression de l'eau.
